(19) Europäisches Patentamt
European Patent Office
Office européen des brevets

(11) Publication number: **0 170 067**
**B1**

(12) # EUROPEAN PATENT SPECIFICATION

(45) Date of publication of patent specification: **06.09.89**

(51) Int. Cl.[4]: **C 08 L 71/00,** C 08 L 69/00

(21) Application number: **85108041.6**

(22) Date of filing: **28.06.85**

(54) **Blends of a poly(aryl ether ketone) and a polyarylate.**

(30) Priority: **29.06.84 US 625915**

(43) Date of publication of application:
**05.02.86 Bulletin 86/06**

(45) Publication of the grant of the patent:
**06.09.89 Bulletin 89/36**

(84) Designated Contracting States:
**AT BE CH DE FR GB IT LI LU NL SE**

(56) References cited:
**EP-A-0 059 077**
**EP-A-0 097 969**
**FR-A-1 475 273**
**US-A-3 480 695**
**US-A-4 438 236**

(73) Proprietor: **AMOCO CORPORATION**
**200 East Randolph Drive P.O. Box 5910-A**
**Chicago Illinois 60680 (US)**

(72) Inventor: **Robeson, Lloyd Mahlon**
**R.D. No. 1 Box 244**
**Whitehouse Station New Jersey 08889 (US)**
Inventor: **Harris, James Elmer**
**211 Birchview Drive**
**Piscataway New Jersey 08854 (US)**

(74) Representative: **Barz, Peter, Dr. et al**
**Patentanwälte Dr. V. Schmied-Kowarzik Dipl.-Ing. G. Dannenberg Dr. P. Weinhold Dr. D. Gudel Dipl.-Ing. S. Schubert Dr. P. Barz**
**Siegfriedstrasse 8**
**D-8000 München 40 (DE)**

**EP 0 170 067 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention is directed to a blend of a crystalline poly(aryl ether ketone) and a polyarylate. These blends exhibit improved mechanical properties and environmental stress rupture resistance.

Poly(aryl ether ketones) are high performance materials which are useful for various demanding applications. They offer a combination of excellent thermal stability, hydrolytic stability, excellent chemical and environmental stress rupture resistance. This combined with very high crystalline melting points yields a property balance not available with other classes of polymers.

In the early 1980's, a poly(aryl ether ketone) of the following formula was made commercially available, e.g. U.S. Patent No. 4,320,224:

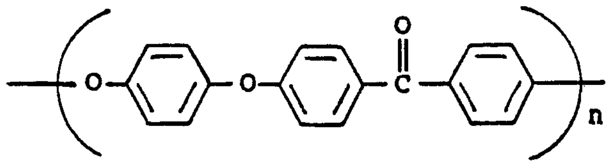

(I)

The poly(aryl ether ketone) of the following formula is known from the literature, e.g. U.S. Patent No. 3,956,240:

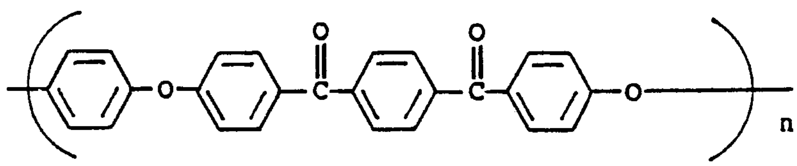

(II)

Another poly(aryl ether ketone) which was available commercially is of the following formula, e.g. U.S. Patent No. 3,953,400:

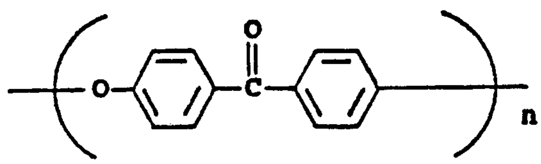

(III)

The poly(aryl ether ketones) are crystalline polymers which exhibit high melting points. Due to their high melting points, high processing temperatures are required (>300°C) in order to fabricate the polymer. Few polymeric materials currently available are stable enough to be blended with the poly(aryl ether ketones) at such high temperatures.

Polyarylates are aromatic polyesters, many of which are derived from a dihydric phenol, particularly 2,2-bis(4-hydroxyphenyl) propane (also identified as Bisphenol-A) and an aromatic dicarboxylic acid(s), particularly mixtures of terephthalic and isophthalic acids. A preferred polyarylate is of the following formula:

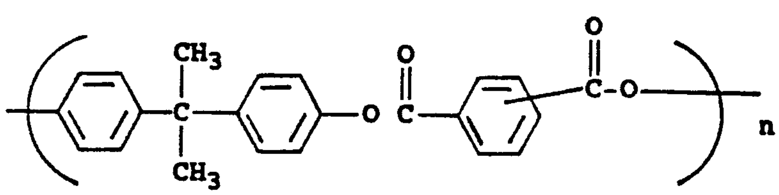

(IV)

Polyarylates are high temperature, high performance thermoplastic polymers with a good combination of thermal and mechanical properties including high impact strength. The polyarylates have good melt stability at high temperatures.

In the present invention it has been found that a blend of a poly(aryl ether ketone) and a polyarylate in the weight ratio of 50:50 to 20:80 has both a notched izod impact strength and tensile impact strength which is significantly higher than that of either of the unblended constituents. Further, the addition of poly(aryl ether ketone) to polyarylate results in a significant improvement in the environmental stress rupture resistance of the polyarylate.

U.S. Patent 4,438,236 issued March 20, 1984 describes a composition containing a melt-processable polymer and an anisotropic melt-forming polymer. Specifically, Example 6 describes blending a polyetheretherketone with a liquid crystal polyester which was copoly (chloro-1,4-phenylene ethylene dioxy-4,4'dibenzoate) terephthalate. This example states that this blend has a significant reduction in melt

viscosity as compared to the polyetheretherketone polymer itself.

EP—A—59077 describes a method for the orientation of films made from a thermoplastic polyether ether ketone. This publication states that the polymer may also contain, for the purpose of improving the fluidity in extrusion processing, up to 50 wt% of heat resistant polymers such as polyarylene polyether polysulfone, polyarylate, polyester, nylon or polycarbonate, or a polyolefin such as polyethylene or polypropylene. However, many of these blends would not be stable at the temperatures needed to mold the blend.

EP—A—97969 describes the addition of a plasticizing amount of a poly(aryl ether) having a molecular weight of from about 1000 to about 5000 to a polyarylate, a polyetherimide, an aromatic polycarbonate and a poly(aryl ether) having a molecular weight in excess of 10,000. Thus, this reference adds a low molecular weight poly(aryl ether) to a polyarylate as a plasticizer.

This invention is directed to a blend comprising a crystalline poly(aryl ether ketone) and a polyarylate derived from at least one dihydric phenol of the following formula:

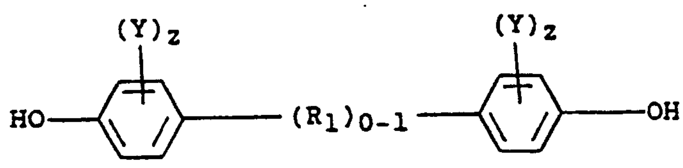

wherein Y is selected from hydrogen, alkyl groups of 1 to 4 carbon atoms, chlorine or bromine, each z, independently, has a value of from 0 to 4, inclusive, and $R_1$ is a divalent saturated or unsaturated aliphatic hydrocarbon radical, particularly an alkylene or alkylidene radical having from 1 to 6 carbon atoms, or a cycloalkylidene or cycloalkylene radical having up to and including 9 carbon atoms, O, $SO_2$ or S; and isophthalic acid or terephthalic acid or mixtures thereof;

said poly(aryl ether ketone) having a reduced viscosity of at least 0.4 to 5.0 dl/g, as measured in concentrated sulphuric acid at 25°C, and said polyarylate having a reduced viscosity of from 0.4 to 1.0 dl/g as measured in chloroform (0.5 g/100 ml chloroform) at 25°C, the weight ratio of said polyarylate to said poly(aryl ether ketone) ranging from 80:20 to 50:50.

The invention is also directed to molded articles made from such a blend.

The Poly(aryl ether ketone)

The crystalline poly(aryl ether ketone)s which are suitable for use herein can be generically characterized as containing a repeating unit of one or more of the following formulae:

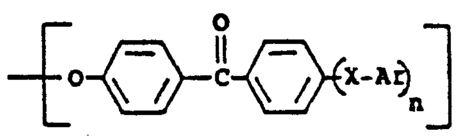
(I)

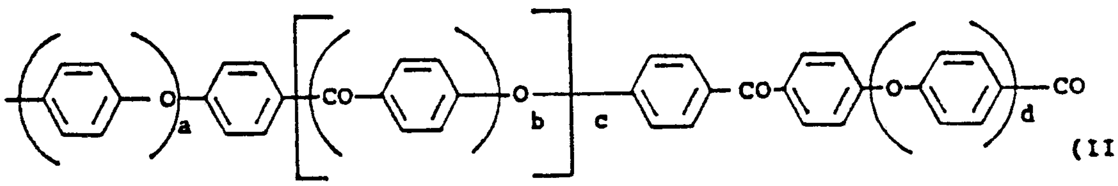
(II)

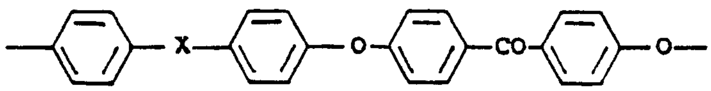
(III)

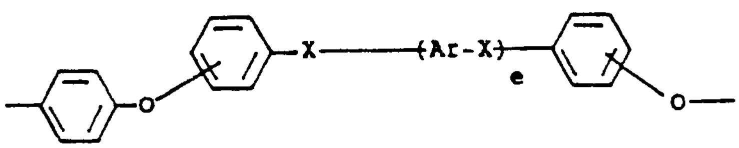
(IV)

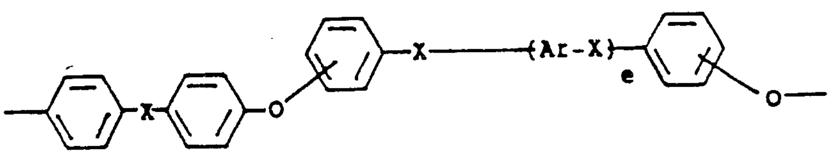
(V)

wherein Ar is independently a divalent aromatic radical selected from phenylene, biphenylene or naphthylene, X is independently O,

$$\underset{\underset{O,}{\|}}{C}$$

or a direct bond, with the proviso that in formulae IV and V at least one group X is

$$\overset{\overset{O}{\|}}{C,}$$

and n is an integer of from 0 to 3, b, c, d and e are 0 or 1 and a is an integer of 1 to 4 and preferably d is 0 when b is 1.

Preferred poly(aryl ketone)s include those having a repeating unit of the formula:

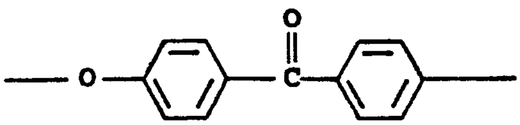

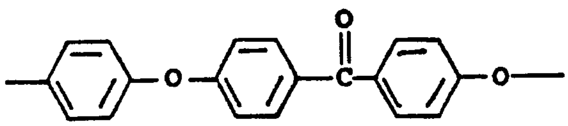

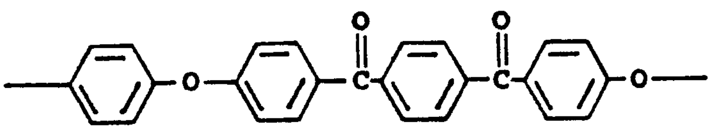

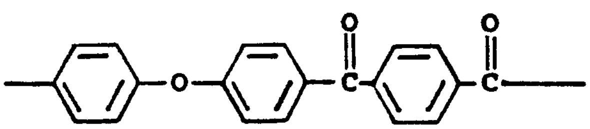

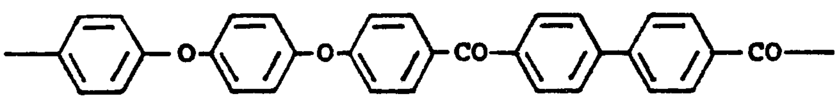

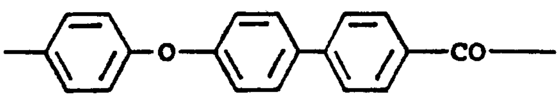

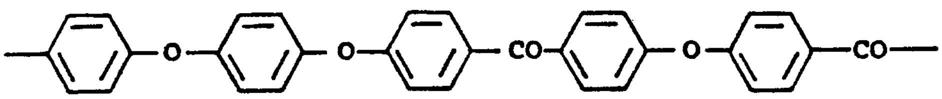

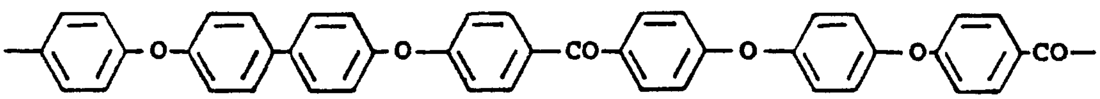

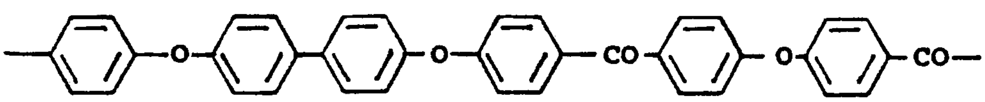

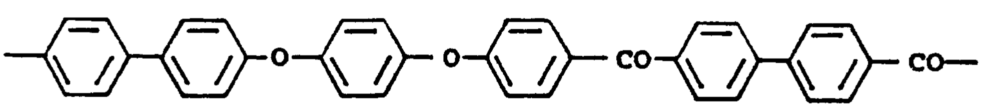

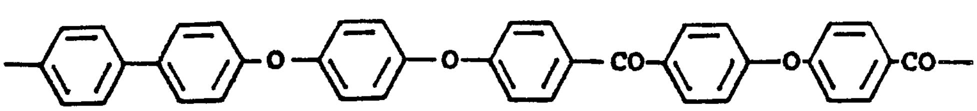

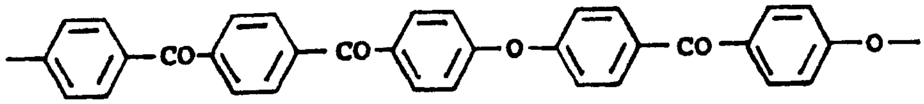

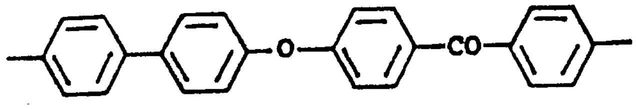

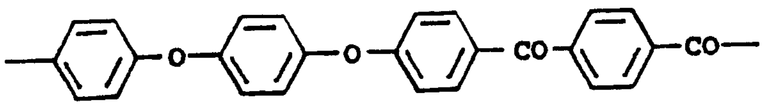

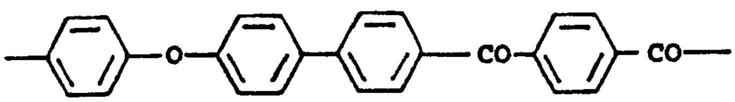

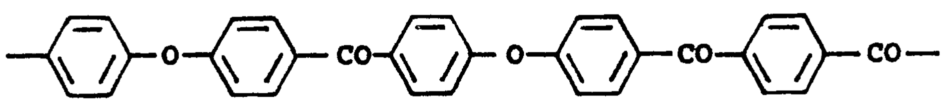

These poly(aryl ketone)s are prepared by methods well known in the art. One such method comprises heating a substantially equimolar mixture of at least one bisphenol and at least one dihalobenzoid compound or at least one halophenol compound as described in Canadian Patent 847,963. Preferred bisphenols in such a process include:

hydroquinone,
4,4'-dihydroxybenzophenone,
4,4'-dihydroxybiphenyl, and
4,4'-dihydroxydiphenyl ether.

Preferred dihalo and dihalobenzoid compounds include:

4-(4-chlorobenzoyl)phenol,
4,4'-difluorobenzophenone,
4,4'-dichlorobenzophenone,
4-chloro-4'-fluorobenzophenone,

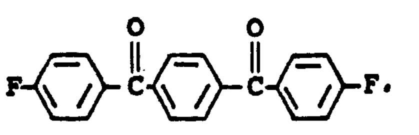 and 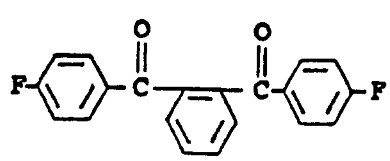

The poly(aryl ketone)s may be produced by the process as described in, for example, U.S. Patent 4,176,222. This process comprises heating in the temperature range of 100° to 400°C, (i) a substantially equimolar mixture of (a) at least one bisphenol and (b) at least one dihalobenzenoid compound, or (ii) at least one halophenol, in which in the dihalobenzenoid compound or halophenol, the halogen atoms are activated by —CO— groups ortho or para thereto, with a mixture of sodium carbonate or bicarbonate and a second alkali metal carbonate or bicarbonate, the alkali metal of said second alkali metal carbonate or bicarbonate having a higher atomic number than that of sodium, the amount of said second alkali metal carbonate or bicarbonate being such that there are 0.001 to 0.2 gram atoms of said alkali metal of higher atomic number per gram atom of sodium, the total amount of alkali metal carbonate or bicarbonate being such that there is at least one alkali metal atom for each phenol group present, and thereafter separating the polymer from the alkali metal halide.

Also, poly(aryl ketone)s such as those containing repeating units of the formula:

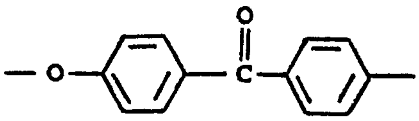

may be produced by Friedel-Craft reactions utilizing hydrogen fluoride-boron trifluoride catalysts as described, for example, in U.S. Patent 3,953,400.

Additionally, poly(aryl ketones) of the following formula:

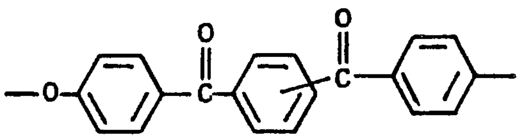

may be prepared by Friedel-Craft reactions using a boron fluoride-hydrogen fluoride catalyst as described in, for example, U.S. Patents 3,441,538; 3,442,857 and 3,516,966.

The polyketones may also be prepared according to the process as described in, for example, U.S. Defensive Publication T 103,703 and U.S. Patent 4,396,755. In this process, reactants such as (a) an aromatic monocarboxylic acid, (b) a mixture of at least one aromatic dicarboxylic acid, and (c) combinations of (a) and (b) are reacted in the presence of a fluoroalkane sulphonic acid, particularly trifluoromethane sulphonic acid.

Additionally, poly(aryl ketone)s of the following formulas:

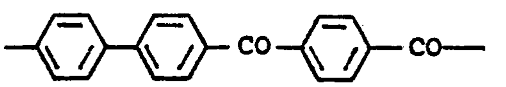 , or 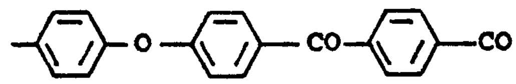

may also be prepared according to the process as described in, for example, U.S. Patent 4,398,020. In such a process,

(a) a mixture of substantially equimolar amounts of

(i) at least one aromatic diacyl halide of the formula

YOC—Ar—COY

where —Ar— is a divalent aromatic radical, Y is halogen and COY is an aromatically bound acyl halide group, which diacyl halide is polymerizable with at least one aromatic compound of (a)(ii), and

(ii) at least one aromatic compound of the formula

H—Ar′—H

where —Ar′— is a divalent aromatic radical and H is an aromatically bound hydrogen atom, which compound is polymerizable with at least one diacyl halide of (a)(i), and

(b) at least one aromatic monoacyl halide of formula

H—Ar″—COW

where —Ar″— is a divalent aromatic radical and H is an aromatically bound hydrogen atom, Y is halogen, and COY is an aromatically bound acyl halide group, which monoacyl halide is self-polymerizable, and

(c) a combination of (a) and (b) in the presence of a fluoroalkene sulphonic acid.

The term poly(aryl ether ketone) as used herein is meant to include homopolymers, copolymers, terpolymers and graft copolymers. For example, any one or more of the repeating units (I) to (V) may be combined to form copolymers, etc.

The poly(aryl ether ketone)s have a reduced viscosity of at least about 0.4 to about 5.0 dl/g, as measured in concentrated sulphuric acid at 25°C.

Polyarylates

The polyarylates which are suitable for use in this invention are derived from a dihydric phenol and at least one aromatic dicarboxylic acid and have a reduced viscosity of from about 0.4 to greater than about 1.0, preferably from about 0.6 to about 0.8 dl/gm, as measured in chloroform (0.5 g/100 ml chloroform) or other suitable solvent at 25°C.

The dihydric phenol is of the following formula:

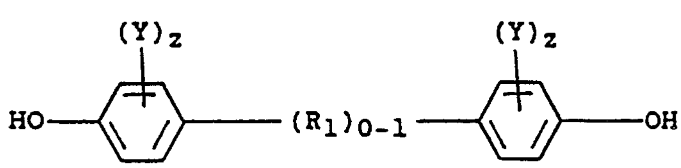

wherein Y is selected from, hydrogen, alkyl groups of 1 to 4 carbon atoms, chlorine or bromine, each z,

independently, has a value of from 0 to 4, inclusive, and $R_1$ is a divalent saturated or unsaturated aliphatic hydrocarbon radical, particularly an alkylene or alkylidene radical having from 1 to 6 carbon atoms, or a cycloalkylidene or cycloalkylene radicals having up to and including 9 carbon atoms, O, $SO_2$, or S. The dihydric phenols may be used individually or in combination. A particularly preferred dihydric phenol is bisphenol-A.

The aromatic dicarboxylic acids that may be used in this invention are terephthalic acid and isophthalic acid.

Preferably, mixtures of isophthalic and terephthalic acids are used. The isophthalic acid to terephthalic acid ratio in the mixture is about 0:100 to about 100:0, while the most preferred acid ratio is about 75:25 to about 50:50. Also, from about 0.5 to about 20 percent of aliphatic diacids containing from 2 to about 10 carbon atoms, such as adipic acid, sebacic acid, and the like may be additionally used in the polymerization reaction.

According to a particularly preferred embodiment of the present invention the polyarylate is derived from bisphenol-A, a mixture of isophthalic and terephthalic acids and diphenyl carbonate.

The polyarylates of the present invention can be prepared by any of the well known prior art polyester forming reactions, such as the reaction of the acid chlorides of the aromatic dicarboxylic acids with the dihydric phenols; the reaction of the diaryl esters of the aromatic dicarboxylic acids with the dihydric phenols; or the reaction of the aromatic diacids with diester derivatives of the dihydric phenol. These processes are described in, for example, U.S. Patents 3,317,464; 3,948,856; 3,780,148; 3,824,213; and 3,133,898.

The polyarylates of this invention include poly(arylate carbonates) which are produced by reacting a dihydric phenol with an aromatic diacid and a diaryl carbonate, such as diphenyl carbonate or carbonyl chloride by methods well known in the art.

It should, of course, be obvious to those skilled in the art that other additives may be included in the blends of this invention. These additives include plasticizers; pigments; flame retardants; reinforcing agents, such as glass fibers; thermal stabilizers; ultraviolet light stabilizers; impact modifiers, and the like.

## Examples

The following examples serve to give specific illustrations of the practice of this invention but they are not intended in any way to limit the scope of this invention.

The following designations are used in the examples and they have the following meaning:

Polyarylate: A polymer having a repeat unit of the formula:

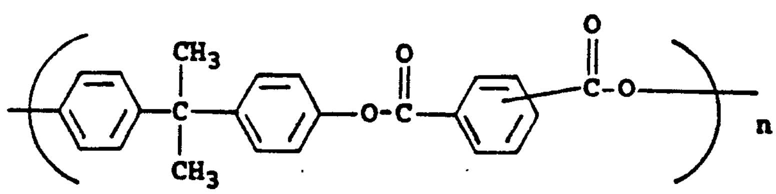

(IV)

having a reduced viscosity of 0.66 as measured in p-chlorophenol, 0.2 g/100 ml at 49°C (ARDEL® D-100 obtained from Union Carbide Corp.).

Polyketone I: A polymer having a repeat unit of the formula:

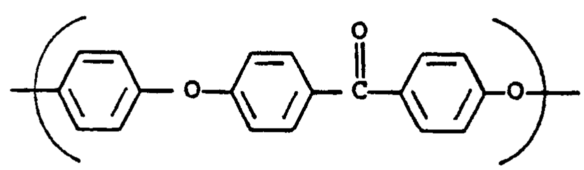

having a reduced viscosity of 1.2 as measured in 96% sulfuric acid (1 wt% solution) at 25°C (PEEK obtained from Imperial Chemicals Industries, Ltd.).

## Example 1

80 weight percent of the Polyarylate was blended with 20 weight percent of Polyketone I in a single screw 2.5 cm (1-inch) diameter extruder with L/D=20/1 at 360°C. The extrudate was chopped into pellets. The pelletized product was injection molded in a 35.4 g ($1\frac{1}{4}$ oz) screw injection molding machine at temperatures of 350—390°C into ASTM test specimens. The test specimens were measured for the following properties: tensile modulus, tensile strength, and percent elongation according to ASTM D-638, tensile impact strength according to ASTM D-1822, notched izod impact strength according to ASTM D-256, and heat distortion temperature according to ASTM D-648.

The results are shown in Table I together with the results of the unblended constituents.

Example 2

The procedure of Example 1 was exactly repeated except that 75 weight percent of Polyarylate was blended with 25 weight percent of Polyketone I.

The results are shown in Table I.

Example 3

The procedure of Example 1 was exactly repeated except that 60 weight percent of Polyarylate was blended with 40 weight percent of Polyketone I.

The results are shown in Table I.

Example 4

The procedure of Example 1 was exactly repeated except that 50 weight percent of Polyarylate was blended with 50 weight percent of Polyketone I.

The results are shown in Table I.

TABLE I

| Example | Description of the Composition Polymer (wt%) | Tensile Modulus MPa (psi) | Tensile Strength MPa (psi) | Elongation (%) | Tensile Impact Strength (Nm/cm$^2$ (ft-lb/in$^2$) | Notched Izod Impact Strength Nm/cm (ft-lbs/in of notch) | Heat Distortion Temp (°C) |
|---|---|---|---|---|---|---|---|
| Control | Polyketone I (100) | 3659 (531,000) | 89 (12,900) | 98 | 25.8 (123) | 0.91 (1.7) | 143 |
| Control | Polyarylate (100) | 2067 (300,000) | 69 (10,000) | 40 | 28.4 (135) | 2.24 (4.2) | 165 |
| 1 | Polyarylate (80)<br>Polyketone I (20) | 2191 (318,000) | 68 (9,850) | 67 | 25.2 (120) | 3.31 (6.2) | — |
| 2 | Polyarylate (75)<br>Polyketone I (25) | 2398 (348,000) | 73 (10,600) | 90 | 37.2 (177) | 4.27 (8.0) | 145 |
| 3 | Polyarylate (60)<br>Polyketone I (40) | 2356 (342,000) | 73 (10,600) | 87 | 40.5 (193) | 4.86 (9.1) | — |
| 4 | Polyarylate (50)<br>Polyketone I (50) | 2597 (377,000) | 82 (11,900) | 108 | 47.9 (228) | 5.18 (9.7) | 147 |

Example 5

A poly(aryl ether ketone) (25 wt%) of the structure (hereinafter Polyketone II):

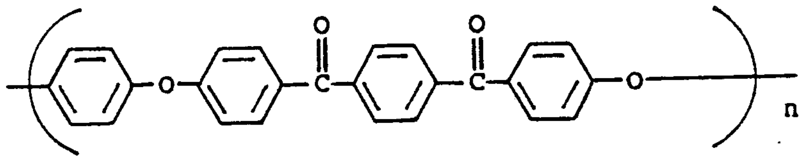

with a reduced viscosity of 1.1 as measured at 1 wt% in 96 wt% sulfuric acid at room temperature was blended with 75 wt% of the Polyarylate in a Brabender blender at 375°C. The sample was compression molded at 375°C in a 10 cm × 10 cm × 0.5 mm (4 × 4 × 0.020 inch) cavity mold. 0.3 mm (⅛ inch) wide strips of material were shear cut from the compression molded sample. A cotton swab was fastened to the center of the sample. The sample was placed under a tensile stress. The cotton swab was saturated with an organic chemical environment and aluminum foil was placed around the cotton to prevent evaporation of the environment. The time to rupture was determined for several environments for the blend and for unblended Polyarylate. The data are listed in Table II. Data on the Polyarylate control and additional Polyarylate/Polyketone blends are also listed in Table II.

TABLE II
Environmental Stress Rupture Resistance

| Environment | Stress MPa (psi) | Time to Rupture: 100% Polyarylate | 80% Polyarylate 20% Polyketone I | 60% Polyarylate 40% Polyketone I | 75% Polyarylate 25% Polyketone II |
|---|---|---|---|---|---|
| Toluene | 3.45 (500) | 2 sec R | 10 sec R | 0.92 hr R | 62 sec R |
| Xylene | 3.45 (500) | 2 sec R | 12 sec R | 1 hr C&B | 76 sec R |
| Ethyl Acetate | 3.45 (500) | 1 sec R | 4 sec R | 1 hr C&B | 12 sec R |
| Acetone | 3.45 (500) | 1 sec R | 7 sec R | 1 hr NCNB | 34 sec R |

R = ruptured
C&B = crazed and brittle
NCNB = not crazed, not brittle.

The mechanical property data for polyarylate-poly(aryl ether ketone) blends demonstrate utility over the entire claimed composition range. The range of 20—50 wt% poly(aryl ether ketone) yields synergistic mechanical behavior in that impact strength data for the blends (both notched izod impact strength and tensile impact strength) are significantly higher than the unblended constituents of the blend.

The addition of certain amounts of poly(aryl ether ketone) to polyarylate yields significant improvements in the environmental stress rupture resistance.

These property advantages indicate the blends of poly(aryl ether ketones) and polyarylate exhibit unexpected synergistic behaviour in impact strength for polyarylates.

## Claims

1. A blend comprising a crystalline poly(aryl ether ketone) and a polyarylate derived from at least one dihydric phenol of the following formula:

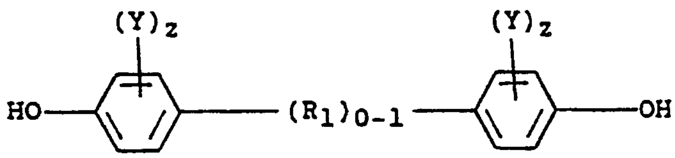

wherein Y is selected from hydrogen, alkyl groups of 1 to 4 carbon atoms, chlorine or bromine, each z, independently, has a value of from 0 to 4, inclusive, and $R_1$ is a divalent saturated or unsaturated aliphatic hydrocarbon radical, particularly an alkylene or alkylidene radical having from 1 to 6 carbon atoms, or a cycloalkylidene or cycloalkylene radical having up to and including 9 carbon atoms, O, $SO_2$ or S; and isophthalic acid or terephthalic acid or mixtures thereof;

said poly(aryl ether ketone) having a reduced viscosity of at least 0.4 to 5.0 dl/g, as measured in concentrated sulphuric acid at 25°C, and said polyarylate having a reduced viscosity of from 0.4 to 1.0 dl/g as measured in chloroform (0.5 g/100 ml chloroform) at 25°C, the weight ratio of said polyarylate to said poly(aryl ether ketone) ranging from 80:20 to 50:50.

2. A blend as defined in claim 1 wherein the poly(aryl ether ketone) has a repeating unit of the following formula:

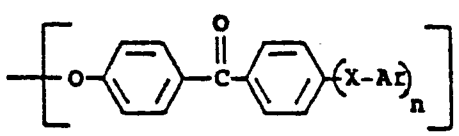

(I)

wherein Ar is independently a divalent aromatic radical selected from phenylene, biphenylene or naphthylene, X is independently O,

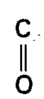

or a direct bond and n is an integer of from 0 to 3; or a repeating unit of the following formula:

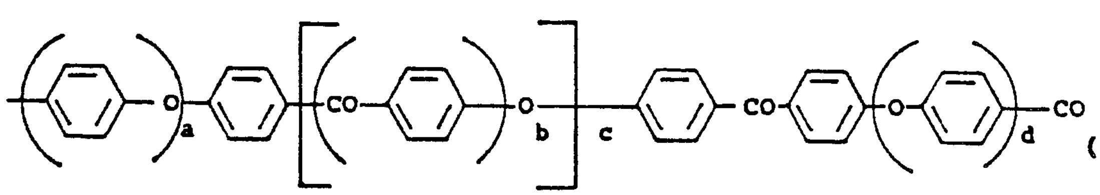

(II)

wherein a is an integer of 1 to 4 and b, c and d are 0 to 1; or

a repeating unit of the following formula:

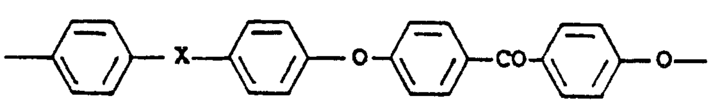

(III)

wherein X is independently O;

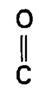

or a direct bond; or

a repeating unit of the following formula:

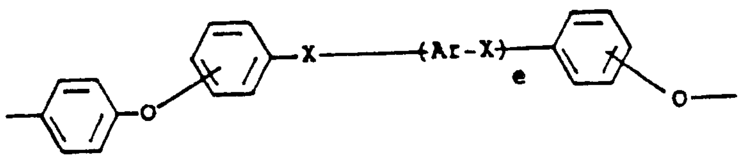

(IV)

wherein A is a divalent aromatic radical selected from phenylene, biphenylene or naphthylene, X is independently O,

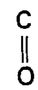

or a direct bond, with the proviso that at least one group X is

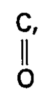

and e is 0 or 1; or a repeating unit of the following formula:

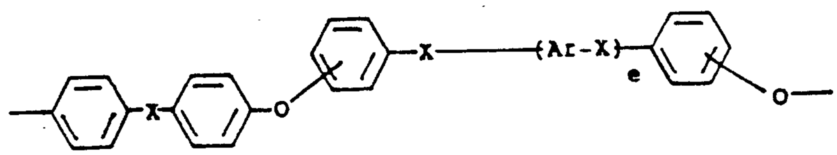

(V)

wherein Ar is a divalent aromatic radical selected from phenylene, biphenylene or naphthylene, X is independently O,

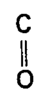

or a direct bond, with the proviso that at least one group X is

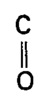

and e is 0 or 1.

3. A blend as defined in one or more of the claims 1 and 2 wherein the poly(aryl ether ketone) has a repeating unit selected from one or more of the following:

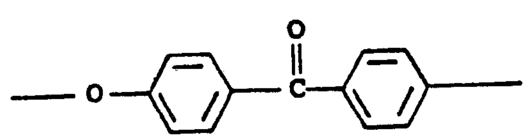

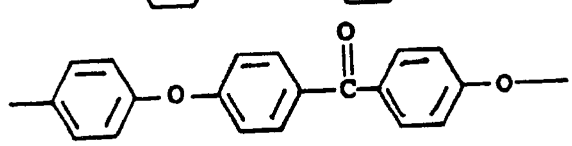

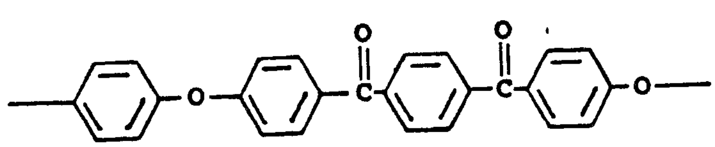

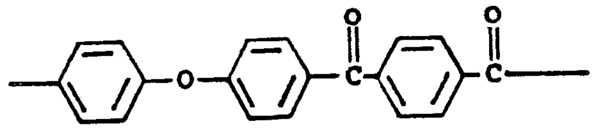

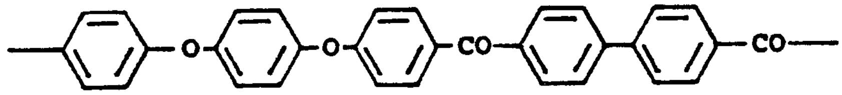

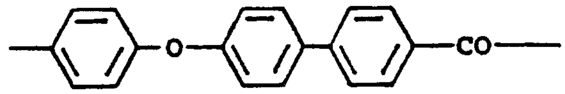

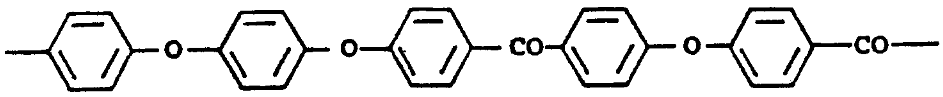

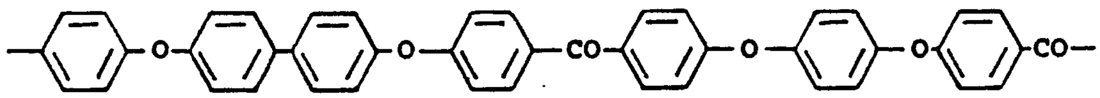

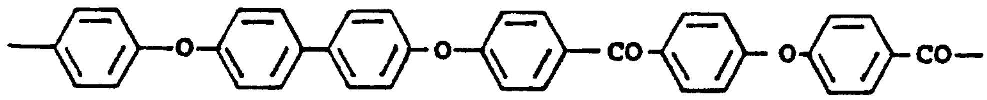

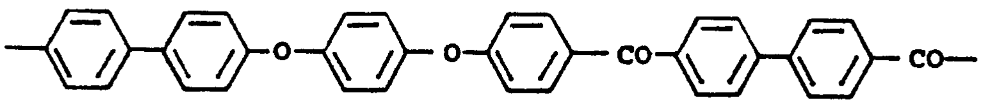

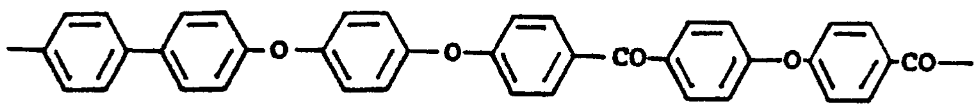

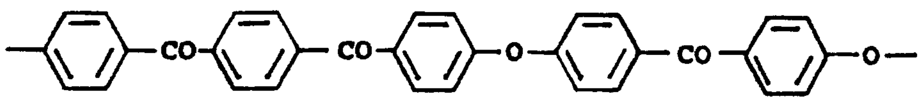

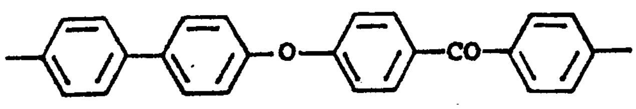

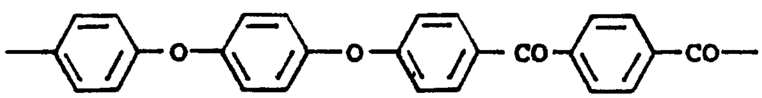

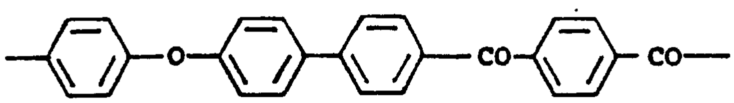

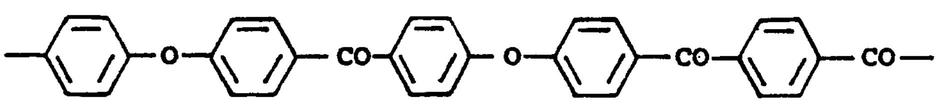

4. A blend as defined in claim 1 wherein the dihydric phenol is bisphenol-A.

5. A blend as defined in one or more of the claims 1 to 4 wherein the polyarylate is also derived from carbonyl chloride.

6. A blend as defined in one or more of the claims 1 to 5 wherein the polyarylate is derived from bisphenol A, a mixture of isophthalic and terephthalic acids and diphenyl carbonate.

7. An injection molded article made from the blend of one or more of the claims 1 to 6.

**Patentansprüche**

1. Mischung, umfassend ein kristallines Poly(aryletherketon) und ein Polyarylat, abgeleitet von wenigstens einem zweiwertigen Phenol der folgenden Formel:

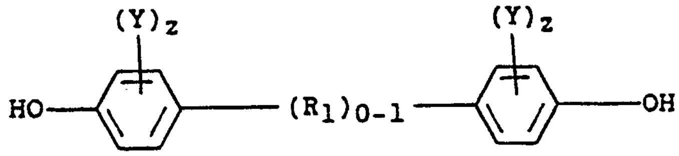

worin Y ausgewählt ist aus Wasserstoff, Alkylgruppen mit 1 bis 4 Kohlenstoffatomen, Chlor oder Brom, jedes z unabhängig einen Wert von 0 bis einschließlich 4 hat und $R_1$ ein zweiwertiger, gesättigter oder ungesättigter aliphatischer Kohlenwasserstoffrest, insbesondere ein Alkylen- oder Alkylidenrest mit 1 bis 6 Kohlenstoffatomen, oder ein Cycloalkyliden- oder Cycloalkenylenrest mit bis zu und einschließlich 9 Kohlenstoffatomen, O, $SO_2$ oder S ist; und Isophthalsäure oder Terephthalsäure oder Mischungen davon;

wobei das Poly(aryletherketon) eine Viskositätszahl von wenigstens 0,4 bis 5,0 dl/g hat, gemessen in konzentrierter Schwefelsäure bei 25°C, und das Polyarylat eine Viskositätstahl von 0,4 bis 1,0 dl/g hat, gemessen in Chloroform (0,5 g/100 ml Chloroform) bei 25°C, und das Gewichtsverhältnis des Polyarylats zum Poly(aryletherketon) im Bereich von 80:20 bis 50:50 liegt.

2. Mischung, wie in Anspruch 1 definiert, worin das Poly(aryletherketon) eine Struktureinheit der folgenden Formel aufweist:

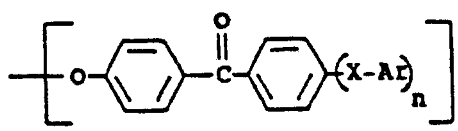 (I)

worin Ar unabhängig ein zweiwertiger, aromatischer Rest ausgewählt aus Phenylen, Biphenylen oder Naphthylen, ist, X unabhängig O, C=O, oder eine direkte Bindung ist und n eine ganze Zahl von 0 bis 3 ist; oder Struktureinheit der folgenden Formel:

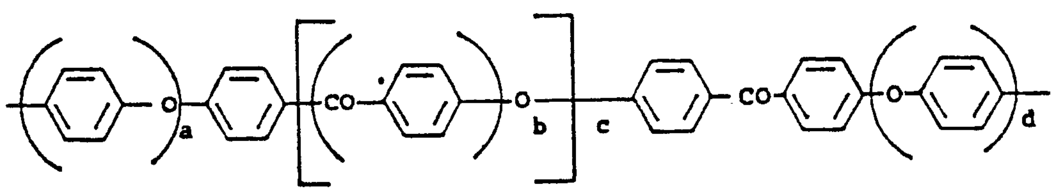 (II)

worin a eine ganze Zahl von 1 bis 4 ist und b, c und d 0 bis 1 sind;
oder eine Struktureinheit der folgenden Formel:

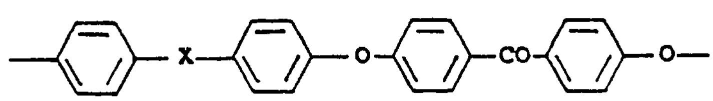 (III)

worin X unabhängig O; C=O oder eine direkte Bindung ist;
oder eine Struktureinheit der folgenden Formel:

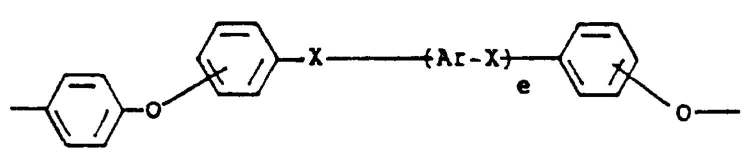 (IV)

worin A ein zweiwertiger aromatischer Rest, ausgewählt aus Phenylen, Biphenylen oder Naphthylen, ist, X unabhängig O, C=O oder eine direkte Bindung ist, mit der Maßgabe, daß wenigstens eine Gruppe X C=O ist, und e 0 oder 1 ist;
ist, mit der Maßgabe, daß wenigstens eine Gruppe X C=O ist, und e 0 oder 1 ist;
oder eine Struktureinheit der folgenden Formel:

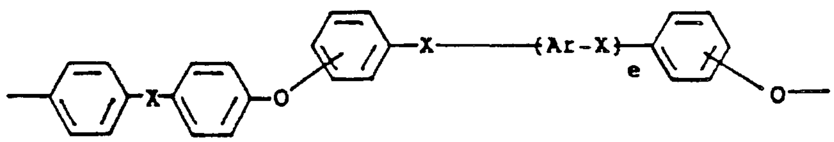

(V)

worin Ar ein zweiwertiger aromatischer Rest, ausgewählt aus Phenylen, Biphenylen oder Naphthylen, ist, X unabhängig O, C=O oder eine direkte Bindung ist, mit der Maßgabe, daß wenigstens eine Gruppe X C=O ist, und e 0 oder 1 ist.

3. Mischung, wie in einem oder mehreren der Ansprüche 1 und 2 definiert, worin das Poly(arylether-keton) eine Struktureinheit aufweist, die ausgewählt ist aus einer der mehreren oder folgenden:

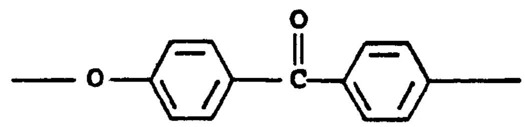

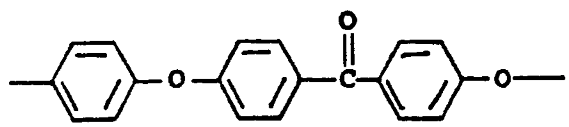

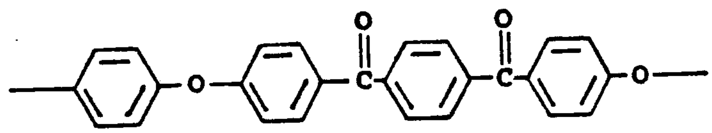

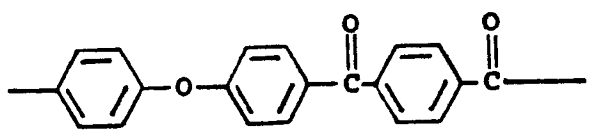

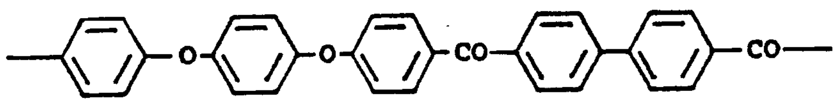

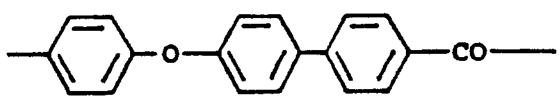

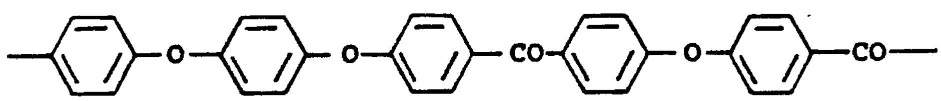

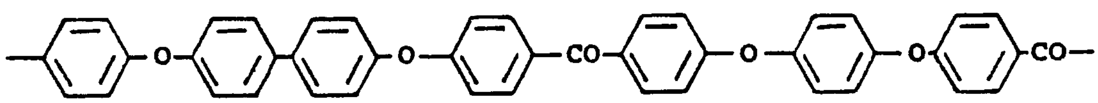

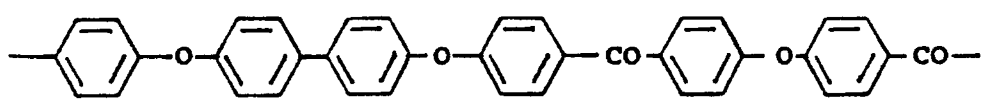

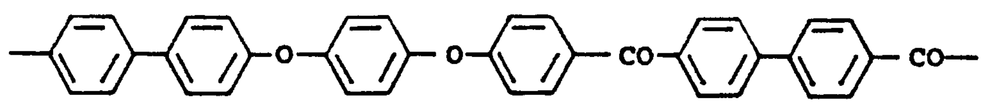

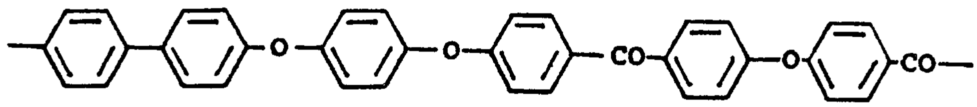

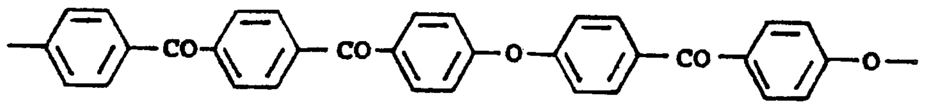

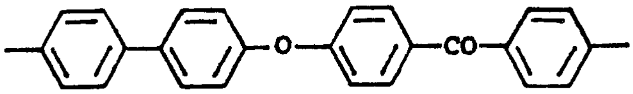

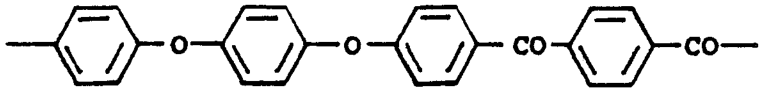

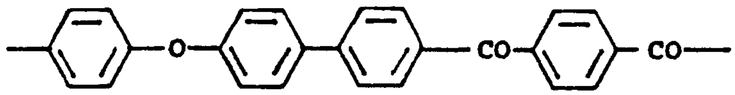

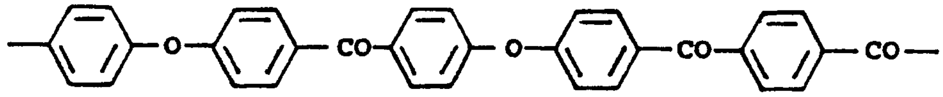

4. Mischung, wie in Anspruch 1 definiert, worin das zweiwertige Phenol Bisphenol-A ist.

5. Mischung, wie in einem oder mehreren der Ansprüche 1 bis 4 definiert, worin das Polyarylat auch von Carbonylchlorid abgeleitet ist.

6. Mischung, wie in einem oder mehreren der Ansprüche 1 bis 5 definiert, worin das Polyarylat von Bisphenol-A, einer Mischung von Isophthal- und Terephthalsäure und Diphenylcarbonat abgeleitet ist.

7. Spritzgußteil, hergestellt aus der Mischung nach einem oder mehreren der Ansprüche 1 bis 6.

**Revendications**

1. Mélange comprenant une poly(aryléther-cétone) et un polyarylate dérivé d'au moins un phénol dihydroxylique de formule suivante:

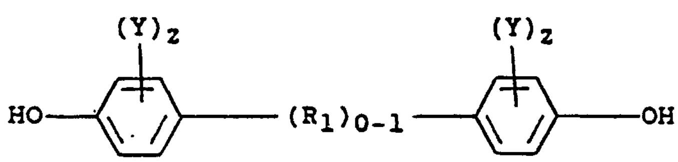

dans laquelle Y est choisi entre l'hydrogène, des groupes alkyle ayant 1 à 4 atomes de carbone, le chlore ou le brome, chaque z a indépendamment une valeur de 0 à 4 inclus et $R_1$ est un radical hydrocarboné aliphatique saturé ou non saturé divalent, en particulier un radical alkylène ou alkylidène ayant 1 à 6 atomes de carbone, ou un radical cycloalkylidène ou cycloalkylène ayant jusqu'à et y compris 9 atomes de carbone, O, $SO_2$ ou S; et l'acide isophtalique ou l'acide téréphtalique ou leurs mélanges;

ladite poly(aryléther-cétone) ayant une viscosité réduite d'au moins 0,4 à 5,0 dl/g, telle que mesurée dans l'acide sulfurique concentre à 25°C, et ledit polyarylate ayant une viscosité réduite de 0,4 à 1,0 dl/g telle que mesurée dans du chloroforme (0,5 g/100 ml de chloroforme) à 25°C, le rapport du poids de polyarylate au poids de poly(aryléther-cétone) ayant une valeur de 80:20 à 50:50.

2. Mélange tel que défini dans la revendication 1, dans lequel la poly(aryléther-cétone) a un motif répété de formule suivante:

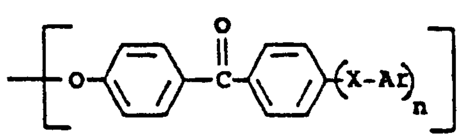 (I)

dans laquelle Ar représente indépendamment un radical aromatique divalent choisi entre les radicaux phénylène, biphénylène ou naphtylène, X représente indépendamment O,

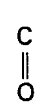

ou une liaison simple et n est un nombre entier de 0 à 3, ou un motif répété de formule suivante:

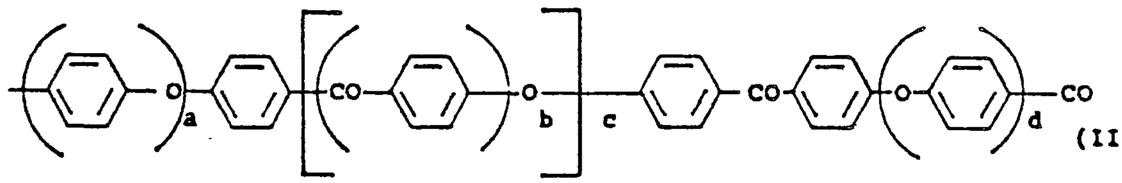

(II)

dans laquelle a est un nombre entier de 1 à 4 et b, c et d ont la valeur 0 à 1; ou un motif répété de formule suivante:

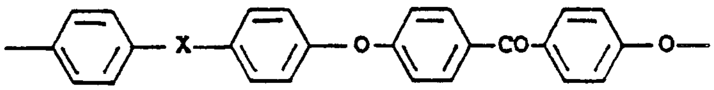

(III)

dans laquelle X représente indépendamment O,

O
‖
C

ou une liaison simple; ou
un motif répété de formule suivante:

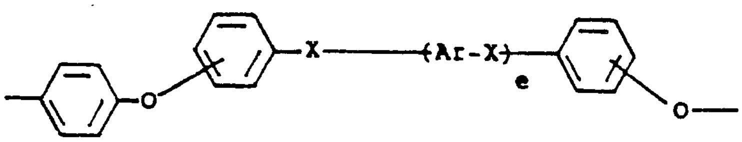

(IV)

dans laquelle A est un radical aromatique divalent choisi entre les radicaux phénylène, biphénylène ou naphtylène, X représente indépendamment O,

C
‖
O

ou une liaison simple, sous réserve qu'au moins un groupe X soit un groupe

C
‖
O

et e a la valeur 0 ou 1; ou un motif répété de formule suivante:

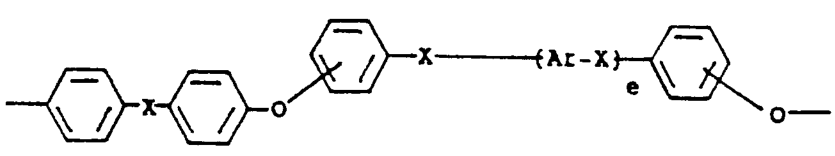

(V)

dans laquelle Ar est un radical aromatique divalent choisi entre phénylène, biphénylène ou naphtylène, X représente indépendamment O,

C
‖
O

ou une liaison simple, sous réserve qu'au moins un groupe X so ıne groupe

C,
‖
O

et e a la valeur 0 ou 1.

3. Mélange tel que défini dans une ou plusieurs des revendications 1 et 2, dans lequel la poly(aryléther-cétone) a un motif répété choisi entre un ou plusieurs des motifs suivants:

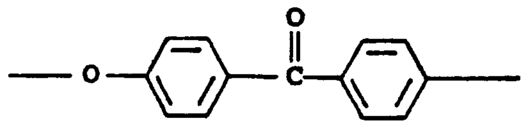

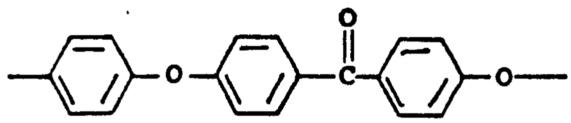

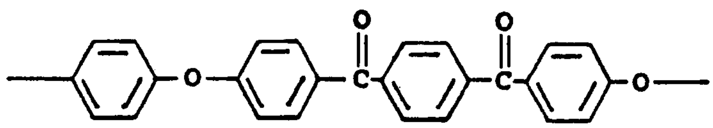

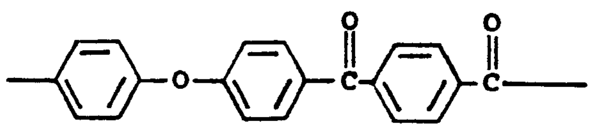

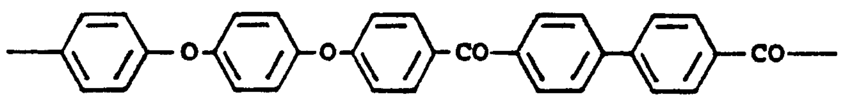

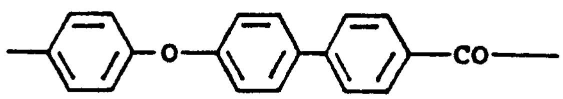

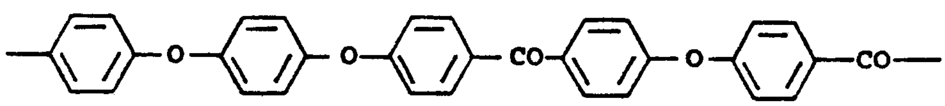

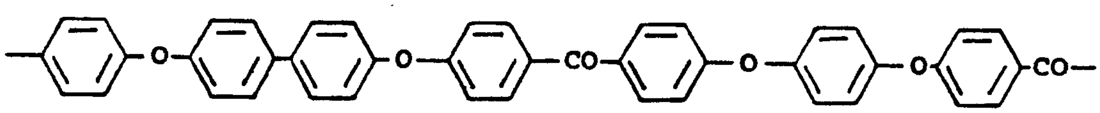

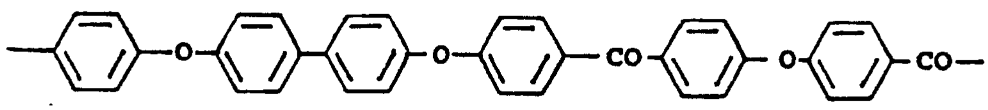

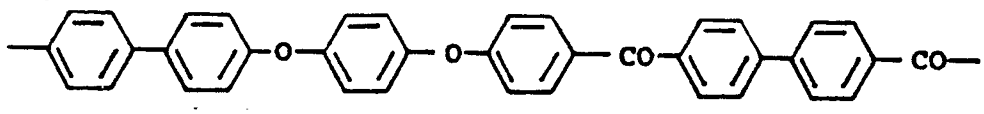

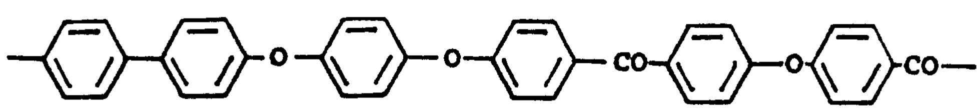

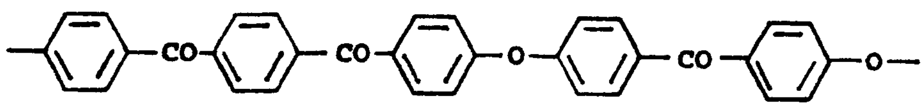

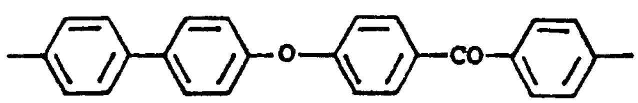

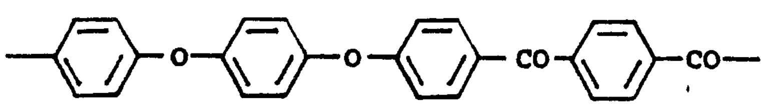

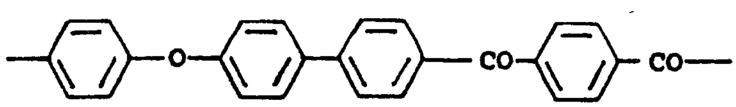

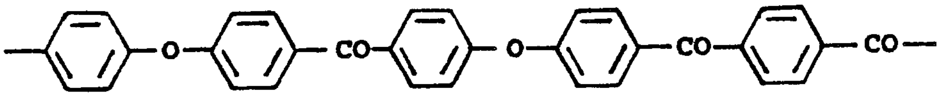

4. Mélange tel que défini dans la revendication 1, dans lequel le phénol dihydroxylique est le bisphénol-A.

5. Mélange tel que défini dans une ou plusieurs des revendications 1 à 4, dans lequel le polyarylate est aussi dérivé de chlorure de carbonyle.

6. Mélange tel que défini dans une ou plusieurs des revendications 1 à 5, dans lequel le polyarylate est dérivé de bisphénol-A, d'un mélange d'acides isophtalique et téréphtalique et de carbonate de diphényle.

7. Article moulé par injection, obtenu à partir du mélange selon une ou plusieurs des revendications 1 à 6.